# EUROPÄISCHE PATENTSCHRIFT

(11) **EP 1 523 801 B1**
(45) Veröffentlichungstag und Bekanntmachung des Hinweises auf die Patenterteilung: **11.10.2006**
(21) Anmeldenummer: 03766172.5
(22) Anmeldetag: 16.07.2003
(51) Int. Cl.: H02K 15/06

(54) **VERFAHREN UND VORRICHTUNG ZUM AXIALEN EINZIEHEN VORGEWICKELTER SPULEN IN NUTEN VON STATOR- ODER ROTORBLECHPAKETEN FÜR ELEKTRISCHE MASCHINEN**
METHOD AND DEVICE FOR AXIALLY DRAWING IN PRE-WOUND COILS INTO THE GROOVES OF STATOR OR ROTOR LAMINATED CORES FOR ELECTRIC MACHINES
PROCEDE ET DISPOSITIF D'INSERTION AXIALE DE BOBINES PREENROULEES DANS DES RAINURES DE PAQUETS DE TOLES STATOR OU ROTOR DESTINES A DES MACHINES ELECTRIQUES

(30) Priorität: 24.07.2002 DE 10233484
(43) Veröffentlichungstag der Anmeldung: 20.04.2005
(73) Patentinhaber: Elmotec Statomat Vertriebs GmbH, 61184 Karben (DE)
(72) Erfinder: SADIKU, Sadik, 63543 Neuberg (DE)
(74) Vertreter: Jochem, Bernd
(86) Internationale Anmeldenummer: PCT/EP2003/007669
(87) Internationale Veröffentlichungsnummer: WO 2004/013946

(56) Entgegenhaltungen:
- US-A- 3 857 171
- US-A- 4 566 180
- US-A1- 2001 010 441

## Beschreibung

Die Erfindung betrifft ein Verfahren zum axialen Einziehen vorgewickelter Spulen in Nuten von Stator- oder Rotorblechpaketen für elektrische Maschinen mittels eines ringförmig angeordnete, parallele, axial verfahrbare Einziehlamellen und einen zentralen, axial verfahrbaren Einziehstern aufweisenden Einziehwerkzeugs, wobei die Spulenwindungen in vorbestimmte Spalte zwischen den Einziehlamellen eingehängt und diese derart in ein Blechpaket eingeführt werden, daß sie dessen Innenwand zwischen den Eingängen der Nuten abdecken, während der Einziehstern die sich innerhalb des Rings der Lamellen erstreckenden inneren Umfangsbereiche der Spulenwindungen durch die Bohrung des Blechpakets hindurch bis über dessen hintere Stirnfläche hinaus vorschiebt. Die Erfindung betrifft außerdem eine Vorrichtung zur Durchführung eines solchen Verfahrens. (siehe US-A-4 566 180 und US-A-3 857 171).

Das größte technische Problem beim axialen Einziehen von vorgewickelten Spulen in ein Stator- oder Rotorbleckpaket mit radial innen offenen Nuten besteht darin, daß bei bestimmten Maßverhältnissen die Spulenwindungen in den Spalten zwischen den Einziehlamellen klemmen. Wird die Einziehkraft erhöht, um die Klemmkraft zu überwinden, kommt es zu einer Steigerung beider Kräfte, und dabei können die isolierten Spulendrähte beschädigt werden. Das Problem der Drahtklemmung ist besonders groß, wenn ein hoher Füllfaktor, d.h. weitestgehendes Ausfüllen der Nutquerschnitte mit Spulendraht, gefordert wird, der einen hohen Aufbau der in den Spalten zwischen den Einziehlamellen übereinander liegenden Spulenwindungen bedingt, und wenn der Spulendraht verhältnismäßig dick ist, so daß allein schon die zum Einziehen notwendige Verformung der Spulenwindungen eine verhältnismäßig große Einziehkraft notwendig macht, die wiederum die Reibung zwischen dem Draht und den Lamellen und dadurch die Klemmneigung vergrößert.

Die Probleme mit den sich beim Vorschieben zwischen den Einziehlamellen verkeilenden Drahtwindungen wurden bisher hauptsächlich durch Wahl anderer Drahtstärken und die Beeinflussung der Reibung zwischen den Einziehlamellen und den Spulenwindungen zu lösen versucht. Zu diesem Zweck wurden z.B. einige Einziehlamellen am Einziehstern befestigt, um durch die synchrone Bewegung des Drahtes und der mitfahrenden Lamellen die Reibung an diesen zu vermeiden. Andere bekannte Vorschläge sehen bestimmte Rückzugsbewegungen oder beschleunigte Bewegungen bestimmter Einziehlamellen vor, die sich vorteilhaft auf die Drahtklemmung auswirken, indem sie zu einer Lockerung der sich verkeilenden Drähte führen und/oder dafür sorgen, daß eine synchrone Vorschubbewegung in der kritischsten Phase des Einziehvorgangs stattfinden kann. Alle diese Maßnahmen genügen jedoch nicht, um z.B. beim Einziehen verteilter Wellenwicklungen mit verhältnismäßig großer Drahtstärke in Statoren von Lichtmaschinen einen Füllfaktor von etwa 90 % zu erreichen.

Der Erfindung liegt die Aufgabe zugrunde, ein Verfahren und eine Vorrichtung der eingangs genannten Art zu schaffen, die im Vergleich mit herkömmlichen Verfahren und Vorrichtungen eine Erhöhung des Füllfaktors gestatten und diese Aufgabe wird erfindungsgemäß durch das im Patentanspruch 1 gekennzeichnete Verfahren und die im Patentanspruch 10 gekennzeichnete Vorrichtung gelöst.

Durch die Erfindung wird erreicht, daß in einem Zwischenstadium des Einziehvorgangs die Wicklungsköpfe der zuerst durch das Blechpaket geschobenen Spulenwindungen den nachfolgenden Spulenwindungen aus dem Weg geräumt werden, so daß sie deren weiteren Vorschub nicht mehr blockieren, behindern und bremsen können. Damit ist eine wesentliche Ursache für deren Verklemmung zwischen den Einziehlamellen beseitigt. Es können insgesamt mehr Spulenwindungen eines bestimmten Drahtquerschnitts in die dafür vorgesehenen Nuten des Blechpakets eingezogen und damit höhere Füllfaktoren erreicht werden.

Normalerweise wird man den Vorschub des Einziehsterns vorübergehend anhalten, um die zuerst gebildeten Wicklungsköpfe über der hinteren Stirnfläche des Blechpakets radial nach außen zu verdrängen. Die kurzzeitige Unterbrechung des Einziehvorgangs hat zwar eine geringfügige Verlängerung der Zykluszeit im Produktionsprozeß zur Folge, die aber praktisch nicht ins Gewicht fällt in Anbetracht der besseren Qualität der Erzeugnisse.

Um in der kritischen Phase des Einziehvorgangs, in der die Wicklungsköpfe der vordersten Spulenwindungen über die hintere Stirnfläche des Blechpakets hinaus zunächst noch weiter vorgeschoben werden, mit synchron mitfahrenden Lamellen arbeiten zu können, ist in bevorzugter Ausgestaltung des erfindungsgemäßen Verfahrens vorgesehen, daß während der ersten Phase die vorderen Enden wenigstens eines Teils der Einziehlamellen während der Vorschubbewegung der Spulenwindungen bis auf einen bestimmten größeren Überstand über die hintere Stirnfläche des Blechpakets vorgeschoben werden, und dann diese Einziehlamellen auf einen bestimmten kleineren Überstand über die hintere Stirnfläche des Blechpakets zurückgezogen werden, bevor die Wicklungsköpfe radial nach außen verdrängt werden. Diese Maßnahme kann sich auf diejenigen Einziehlamellen beschränken, die dem Verdrängen der zuerst gebildeten Wicklungsköpfe radial nach außen im Wege stehen. Es können aber auch sämtliche Einziehlamellen in der ersten Phase synchron mit dem Einziehstern und den Spulenwindungen vorgeschoben und nach dem Anhalten des Einziehsterns mit ihren vorderen Enden wieder bis annähernd zur hinteren Stirnfläche des Blechpakets zurückgezogen werden, bevor die bereits gebildeten, über die hintere Stirnfläche des Blechpakets und die vorderen Enden der Einziehlamellen überstehenden Wicklungsköpfe radial nach außen verdrängt werden.

Das als "Freiformen" (Formen, um den Weg für die nachfolgend einzuziehenden Spulen freizumachen) zu bezeichnende, in einem Zwischenstadium des Einziehvorgangs stattfindende radiale Verdrängen der Wicklungsköpfe kann sich sogar dann als vorteilhaft erweisen, wenn diejenigen Einziehlamellen, die dem radialen Verdrängen der vordersten Wicklungsköpfe im Wege stünden, in der ersten Phase des Vorschubs überhaupt nur bis dicht über die hintere Stirnfläche des Blechpakets vorgeschoben werden und in dieser Position verharren, während der Einziehstern zur Bildung der Wicklungsköpfe der vordersten Spulenwindungen noch weiter vorfährt. Dann können zwar diese Spulenwindungen hinter dem Blechpaket radial nach außen nachgeben, aber auch dazu ist eine Verformungsarbeit notwendig, die eine Vergrößerung der Einziehkraft und damit der Klemmgefahr zur Folge hätte, wenn die radiale Verformung nicht erfindungsgemäß in einem besonderen Vorgang stattfindet.

Das vorgeschlagene Verfahren findet bevorzugt Anwendung zum Einziehen von Spulen in Form einer verteilten Wellenwicklung, deren Spulenwindungen im fertig eingezogenen Zustand sich jeweils am Austritt aus einer Nut des Blechpakets auf zwei sich nach entgegengesetzten Seiten erstreckende Wicklungsköpfe verteilen. Dabei wird das Verfahren in der Weise ausgeführt, daß jeweils zunächst die sich innerhalb des Rings der Einziehlamellen erstreckenden inneren Umfangsbereiche derjenigen Spulenwindungen, die einen der beiden Wicklungsköpfe bilden, vollständig durch das Blechpaket geschoben und dann radial nach außen verdrängt werden, und anschließend die inneren Umfangsbereiche derjenigen Spulenwindungen, die den anderen der beiden Wicklungsköpfe bilden, vom Einziehstern vollständig durch das Blechpaket geschoben werden.

Die Erfindung ist aber nicht auf diese Anwendung beschränkt. Sie ist genauso gut anwendbar beim Einziehen von Spulen in Form einer Vielzahl von herkömmlichen Schleifenwicklungen mit rundem oder polygonalem Querschnitt, insbesondere dann, wenn sich deren Wicklungsköpfe im fertig eingezogenen Zustand am Umfang teilweise überlappen. In solchen Fällen wird man das erfindungsgemäße Verfahren in der Weise durchführen, daß jeweils zunächst die inneren Umfangsbereiche derjenigen Spulen, deren Wicklungsköpfe im fertig eingezogenen Zustand radial weiter außen liegen, vollständig durch das Blechpaket geschoben und dann radial nach außen verdrängt werden, und anschließend die inneren Umfangsbereiche derjenigen Spulen, deren Wicklungsköpfe im fertig eingezogenen Zustand radial weiter innen liegen, vom Einziehstern vollständig durch das Blechpaket geschoben werden.

Um eine definierte Formgebung der radial nach außen verdrängten Wicklungsköpfe zu erreichen, ist in weiterer bevorzugter Ausgestaltung der Erfindung vorgesehen, daß die Wicklungsköpfe, die radial nach außen verdrängt werden, jeweils maximal bis zur Anlage gegen eine axial über die hintere Stirnfläche des Blechpakets hinausragende Formschulter verformt werden.

Es versteht sich auch, daß nach dem Freiformen der zuerst gebildeten Wicklungsköpfe bei der Fortsetzung des Einziehvorgangs alle herkömmlich bekannten Maßnahmen ergriffen, insbesondere die Relativbewegungen der Einziehlamellen mit Bezug auf die Vorschubbewegung des Einziehsterns derart gesteuert werden können, daß im Einzelfall mit jeweils minimaler Einziehkraft die Vollendung des Einziehvorgangs erreicht wird. Es besteht u.a. die Möglichkeit, daß einige Einziehlamellen, die sich am Umfang nicht Bereich der zuerst radial nach außen verdrängten Wicklungsköpfe und unmittelbar neben den zuletzt vollständig durch das Blechpaket geschobenen Wicklungsköpfen befinden, am Einziehstern befestigt sind und somit als mitfahrende Lamellen synchron mit den Spulenwindungen axial vorgeschoben werden.

Die erfindungsgemäß zur Durchführung des neuen Verfahrens vorgesehene Vorrichtung hat in bekannter Weise eine Halterung für ein Stator- oder Rotorblechpaket, ringförmig angeordnete, parallele, axial durch das Statorblechpaket verfahrbare Einziehlamellen und einen zentralen, axial verfahrbaren Einziehstern. Neu ist, daß an der Halterung für das Blechpaket auf der in Vorschubrichtung des Einziehsterns hinteren Seite eine Formeinrichtung angeordnet ist, durch die in einem Zwischenstadium des Einziehvorgangs, in dem erst ein Teil der einzuziehenden Spulenwindungen mit ihrem inneren Umfangsbereich, der sich innerhalb des Rings der Lamellen erstreckt und im fertig eingezogenen Zustand über die hintere Stirnseite des Blechpakets vorstehende Wicklungsköpfe bildet, vollständig durch das Blechpaket hindurch geschoben worden ist, wenigstens ein Teil dieser bereits gebildeten Wicklungsköpfe radial nach außen verdrängbar ist.

Die vorgeschlagene Formeinrichtung hat vorzugsweise radial bewegbare Formfinger, die hinter der hinteren Stirnfläche des Blechpakets radial nach innen bis in eine Stellung bewegbar sind, in der sie sich radial innerhalb von an der radial inneren Seite der Einziehlamellen anliegenden Spulenwindungen befinden. In dem genannten Zwischenstadium des Einziehvorgangs sind diese Formfinger radial nach außen bis über die Bohrung des Blechpakets hinaus bewegbar und nehmen die dabei erfaßten Wicklungsköpfe mit. Als besonders geeignet haben sich Formfinger erwiesen, die einen sich radial erstreckenden Schenkel, an dem sie geführt sind, und einen sich axial erstreckenden Schenkel, mit dem sie die radial zu verdrängenden Wicklungsköpfe erfassen, aufweisen. Als Gegenform dienen zweckmäßigerweise an der Halterung des Blechpakets angebrachte Formschultern, die axial über die hintere Stirnfläche des Blechpakets überstehen und eine radial äußere Andruckfläche für von den Formfingern radial nach außen verdrängte Wicklungsköpfe bilden. In der bevorzugten praktischen Ausführungsform sind die Formschultern an radial verfahrbaren Stützfingern angeformt, die Kragenstützen für in die Nuten des Blechpakets eingesetzte Schutzhülsen mit stirnseitig überstehenden Kragen bilden.

In der Regel empfiehlt es sich, einen Einziehstern zu verwenden, der in Vorschubrichtung vor dem sternförmigen, in die Spalte zwischen den Einziehlamellen eingreifenden, die Spulenwindungen vor sich her schiebenden Teil ein Vorderteil besitzt, das die radial inneren Umfangsbereiche der Spulenwindungen radial führt. Damit die erfindungsgemäße Einziehvorrichtung auch mit einem derartigen Einziehstern funktioniert, wird vorgeschlagen, daß sein vorderer Teil an denjenigen Stellen des Umfangs, wo sich Formfinger befinden, mit Ausnehmungen versehen ist, in welche die Formfinger während des Vorschubs des Einziehsterns axial eintauchen und aus denen sie in dem genannten Zwischenstadium des Einziehvorgangs radial ausfahren. Auch ein üblicherweise zur Anwendung kommender Ausrichtstern zur Abstützung der vorderen Enden der Einziehlamellen ist in weiterer vorteilhafter Ausbildung der Erfindung an denjenigen Stellen des Umfangs, wo sich Formfinger befinden, mit Ausnehmungen versehen, so daß er axial an den Formfingern vorbei bewegbar ist.

Nachstehend wird ein Ausführungsbeispiel der Erfindung anhand der Zeichnung näher erläutert. Es zeigen:
- Fig. 1: einen Längsschnitt durch eine erfindungsgemäße Einziehvorrichtung in der Ausgangsstellung vor Beginn eines Einziehvorgangs;
- Fig. 2: die Einziehvorrichtung nach Fig. 1 in einer Stellung bei teilweise vorgeschobenem Einziehstern und teilweise vorgefahrenen Einziehlamellen;
- Fig. 3: die Vorrichtung nach Fig. 1 und 2 in einem Zwischenstadium des Einziehvorgangs, in welchem der Einziehstern angehalten hat und die zunächst weiter vorgeschobenen Einziehlamellen bis dicht oberhalb der oberen Stirnfläche des Blechpakets zurückgezogen worden sind;
- Fig. 4: die Vorrichtung nach Fig. 1 bis 3 in einer Stellung, in welcher Formfinger die im Zwischenstadium nach Fig. 3 bereits gebildeten oberen Wicklungsköpfe radial nach außen gezogen haben;
- Fig. 5: die Vorrichtung nach Fig. 1 bis 4 im Zustand nach Vollendung des Einziehvorgangs und
- Fig. 6: eine Draufsicht auf die in der Vorrichtung nach Fig. 1 bis 5 enthaltene Formeinrichtung zum radialen Formen der bis zum Erreichen eines Zwischenstadiums des Einziehvorgangs bereits gebildeten Wicklungsköpfe.

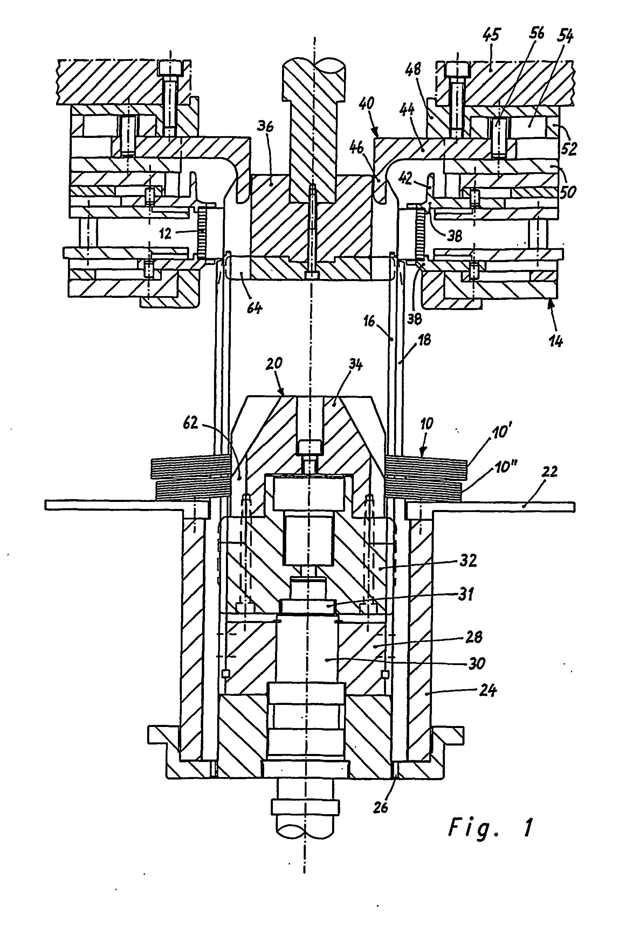

Die in der Zeichnung gezeigte Vorrichtung dient im Beispielsfall zum Einziehen einer verteilten Wellenwicklung 10 in das Statorblechpaket 12 einer Lichtmaschine für Kraftfahrzeuge. Das Statorblechpaket 12 sitzt während des Einziehvorgangs in einer insgesamt mit 14 bezeichneten Statorhalterung. Das axiale Einziehen der Spulenwindungen 10 in die radial nach innen offenen Nuten des Statorblechpakets 12 erfolgt in an sich bekannter Weise mit einem Einziehwerkzeug, das ringförmig angeordnete, parallele Einziehlamellen 16, radial außerhalb von diesen ringförmig angeordnete, parallele Deckstreifenlamellen 18 und einen zentral angeordneten Einziehstern 20 aufweist. Die durch einen Einziehvorgang einzuziehenden Spulen sind in bestimmte Spalte zwischen den Einziehlamellen 16 und zwischen den Deckstreifenlamellen 18 eingehängt worden und liegen in der Ausgangsstellung nach Fig. 1 mit ihrem äußeren Umfangsbereich, der sich außerhalb des Rings der Lamellen 16 und 18 befindet, auf einem Spulenteller 22, unter dem sich ein Gehäuse 24 befindet, das die unteren Enden der feststehenden Deckstreifenlamellen 18, eine Einrichtung zur Zuführung der Deckstreifen zu den Deckstreifenlamellen 18, von der nur eine Zufuhröffnung 26 gezeigt ist, sowie in der Ausgangsstellung nach Fig. 1 die mit 28 bezeichnete Lamellenführung für die Einziehlamellen 16, zumindest einen Teil des Einziehsterns 20 sowie Antriebsglieder 30, 31 für diesen und die Lamellenführung 28 aufnimmt. Wie in der Zeichnung dargestellt, greifen konzentrische, rohrförmige Stößel 30, 31 an der Lamellenführung 28 bzw. dem Einziehstern 20 an, um diese während eines Teils des Einziehhubs synchron vorzuschieben und während anderer Phasen des Einziehvorgangs die Lamellenführung 28 mit den daran befestigten Einziehlamellen 16 sowie den Einziehstern 20 unabhängig voneinander vorzuschieben und zurückzuziehen. Der axiale Antrieb 30, 31 des Einziehsterns 20 und der Lamellenführung 28 ist an sich bekannt und braucht deshalb nicht näher beschrieben zu werden.

Der Einziehstern 20 besteht im Ausführungsbeispiel aus einem unteren, sternförmigen Teil 32, der in die Spalte zwischen den Einziehlamellen 16 eingreift und die Spulenwindungen 10 vor sich her schiebt, sowie einem oberen bzw. vorderen Teil 34, der die sich im Inneren des Rings der Einziehlamellen 16 erstreckenden inneren Umfangsbereiche der Spulenwindungen 10 radial führt.

Nachdem die Spulen 10 in die Spalte zwischen den Einziehlamellen 16 eingehängt worden sind, wird überlicherweise vor oder nach dem Aufsetzen des Statorblechpakets 12 auf die freien Enden der Lamellen 16, 18 ein Ausrichtstern 36 zwischen die oberen Enden der Einziehlamellen 16 eingeführt, um diese gegenseitig auszurichten und gegenüber den Querkräften, die durch das Verkeilen der Drahtwindungen während des Einziehvorgangs entstehen, abzustützen. Der Ausrichtstern 36 wird in der Endphase des Einziehvorgangs nach oben zurückgezogen oder durch den Einziehstern 20 mitgenommen und dadurch von den oberen Enden der Einziehlamellen 16 abgehoben.

Insofern, wie bisher beschrieben, entspricht das gezeigte Einziehwerkzeug herkömmlichen Ausführungen. Dies gilt auch noch für die Anbringung von radial verfahrbaren oberen und unteren Stützfingern an der Statorhalterung 14, deren radial innere Enden zwischen die axial über die Stirnflächen des Statorblechpakets vorstehenden Kragen der die Statornuten auskleidenden Isolierhülsen geschoben werden, um diese beim Einziehen der Spulenwindungen zu stützen und zu schützen. Neu ist jedoch die Anbringung radial verfahrbarer Formfinger 40 in Vorschubrichtung hinter der hinteren Stirnfläche, im Beispielsfall also oberhalb des Statorblechpakets. Sie wirken als Formeinrichtung zusammen mit Formschultern 42, die an den oberen Stützfingern 38 angeformt sind und kragenförmig nach oben über die obere (hintere) Stirnfläche des Statorblechpakets überstehen. Die Formfinger 40 haben jeweils einen sich radial nach innen erstreckenden Schenkel 44, an dem sie geführt sind, und einen an dessen inneres Ende angeformten, sich axial in Richtung zum Antrieb erstreckenden Schenkel 46, der sich im wesentlichen parallel zur Formschulter 42 erstreckt.

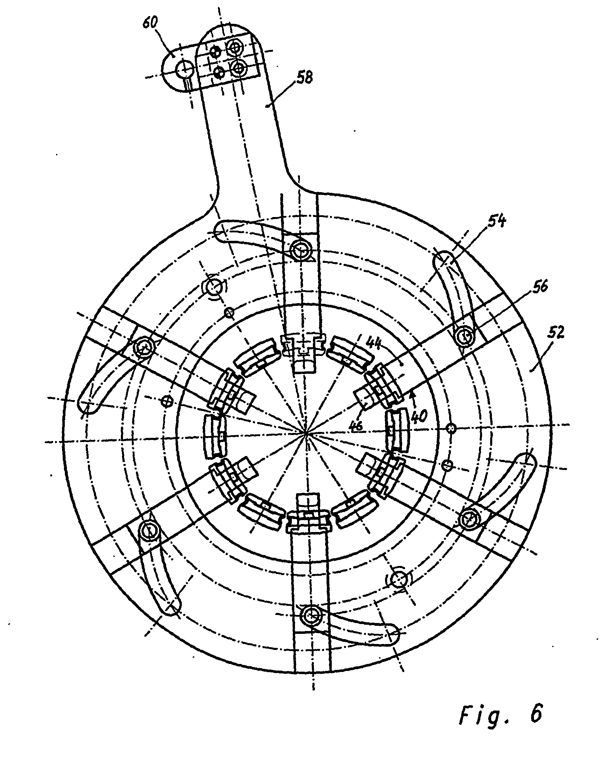

Wie aus Fig. 1 in Verbindung mit Fig. 6 ersichtlich, sind im Beispielsfall sechs Formfinger 40 zwischen einem oberen Gehäuseteil 48 und einem unteren Gehäuseteil 50 radial verschieblich geführt. Zwischen den beiden Gehäuseteilen 48, 50 ist eine im wesentlichen ringförmige Scheibe 52 drehbar geführt, die mit mehreren schräg zur Umfangsrichtung verlaufenden, leicht gekrümmten Führungsnuten 54 versehen ist, in die jeweils ein im radialen Schenkel 44 eines Formfingers 40 sitzender Führungsbolzen 56 eingreift. Die ringförmige Scheibe 52 hat einen radialen äußeren Vorsprung 58, an dem über eine Koppel 60 ein nicht gezeigter Drehantrieb, z.B. in Form einer Schub- und Zugstange, angreift. Es genügt ein einfacher Linearantrieb, z.B. durch einen Kraftzylinder, weil die ringförmige Scheibe 42 nur eine verhältnismäßig kurze Drehbewegung auszuführen braucht, um die Führungsbolzen 56 von dem einen zum anderen Ende der Führungsnuten 54 zu bewegen und dabei sämtliche Formfinger 44 aus ihrer einen in die andere radiale Endstellung zu bewegen. Mit dem gezeigten Bewegungsmechanismus für die Formfinger 40, der vorzugsweise an einem an sich bekannten, die Statorhalterung 14 gegen die Einziehkraft abstützenden Niederhalter 45 angebracht ist, wird erreicht, daß ein einziger Antrieb genügt, um sämtliche über den Umfang verteilte Formfinger synchron zu bewegen und in einer bestimmten Stellung zu fixieren. Selbstverständlich könnten auch andere Antriebe und Steuerungen zum Synchronisieren benutzt werden, um die Formfinger 40 radial zu bewegen.

Die bei herkömmlichen Einziehwerkezugen nicht vorhandenen Formfinger 40 würden bei Verwendung eines Einziehsterns mit einem die einzuziehenden Spulen radial führenden Vorderteil und bei Verwendung eines Ausrichtsterns mit diesen Teilen kollidieren. Zur Anpassung an die Erfindung sind deshalb das Vorderteil 34 des Einziehsterns 20 und der Ausrichtstern 36 jeweils an denjenigen Stellen des Umfangs, die in Flucht liegen mit Formfingern 40, Ausnehmungen 62 bzw. 64 im Umfang angebracht, so daß die Formfinger 40 in ihrer radial inneren Stellung in diese Ausnehmungen eingreifen können.

Mit der vorstehend beschriebenen Vorrichtung kann ein Einziehvorgang wie folgt ausgeführt werden:

Im Ausgangszustand gemäß Fig. 1 nehmen der Einziehstern 20 und Einziehlamellen 16 ihre nach unten zurückgezogene Stellung ein. In dieser Stellung werden die einzuziehenden Spulen 10 in die Spalte zwischen den Einziehlamellen 16 eingehängt, und dann werden das Statorblechpaket 12 und der Ausrichtstern 36 in herkömmlicher Weise auf die Lamellen aufgesetzt. In der Ausgangsstellung könnten die Einziehlamellen 16 mit ihren oberen Enden auch schon soweit über die Deckstreifenlamellen 18 vorstehen, daß sie bis zur oberen Stirnfläche des Statorblechpakets reichen und die scharfkantigen Statorzähne abdekken. Die Formfinger 40 nehmen in der Ausgangsstellung ihre radial innere Endstellung ein oder werden in der ersten Phase des Einziehvorgangs in diese Stellung gefahren, bevor der Einziehstern 20 die inneren Umfangsbereiche der vordersten (obersten) Spulenwindungen 10 durch das Statorblechpaket 12 geschoben hat.

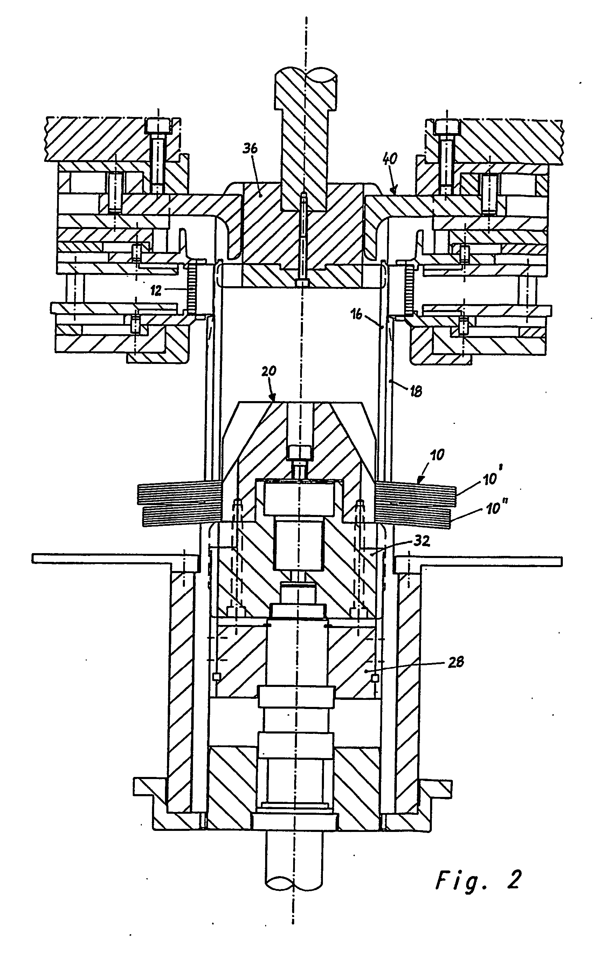

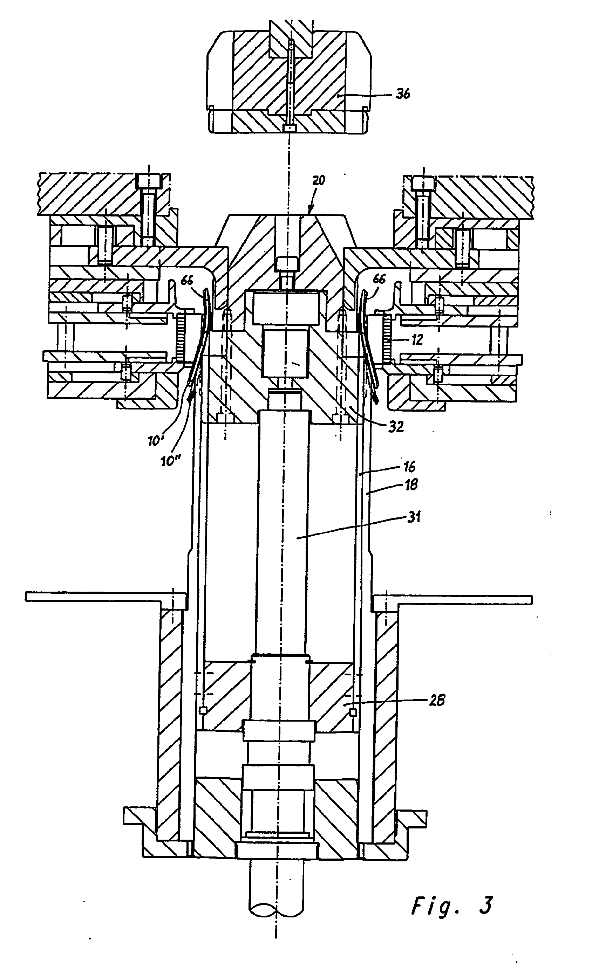

Fig. 2 zeigt einen Zwischenzustand nach dem Starten des Einziehhubs. Die Einziehlamellen 16 und der Einziehstern 20 sind synchron vorgeschoben worden und haben die einzuziehenden Spulenwindungen 10 dabei mitgenommen. In dieser Anfangsphase findet weder eine Verformung noch eine Reibung der Drahtwindungen an den Einziehlamellen 16 statt. Die Einziehlamellen 16 könnten in der Stellung nach Fig. 2, in der sie mit ihren oberen Enden gerade ein wenig über die obere Stirnfläche des Statorblechpakets 12 hinausgefahren sind, vorübergehend angehalten werden, während der Einziehstern 20 weiter vorfährt, denn bereits in dieser Stellung erfüllen die Einziehlamellen 16 ihre Führungsfunktion und ihre Schutzfunktion, indem sie die scharfkantigen Statorzähne abdecken und verhindern, daß sie die Spulendrähte beschädigen. Es empfiehlt sich allerdings, die Einziehlamellen 16 wenigstens dann wieder zusammen mit dem Einziehstern 20 synchron weiter vorzuschieben, wenn die Spulenwindungen das Statorblechpaket 12 erreichen und beim Hineinziehen in Statornuten verformt werden. Dadurch steigt die notwendige Vorschubkraft und kann im Einzelfall, wenn die Reibung der Spulenwindungen an feststehenden Einziehlamellen 16 hinzukommt, zur Klemmung führen. Deshalb erscheint es besser, im weiteren Verlauf des Einziehhubs bis zum Erreichen des in Fig. 3 dargestellten Zwischenstadiums, in dem der Einziehstern 20 vorübergehend anhält, die Einziehlamellen 16 mit hochfahren zu lassen, damit die Spulenwindungen an ihnen nicht entlanggleiten und reiben müssen. Nach dem Anhalten des Einziehsterns 20 müssen die Einziehlamellen 16 jedoch wieder soweit zurückgezogen werden, daß sie die in Fig. 2 gezeigte Stellung einnehmen. Diese nehmen sie dann auch in dem in Fig. 3 dargestellten Zwischenstadium ein, in dem die inneren Umfangsbereiche einer bestimmten Anzahl der zu oberst in den Spalten zwischen den Einziehlamellen 16 liegenden Spulenwindungen zu über die obere Stirnfläche des Statorblechpakets hinausragenden Wicklungsköpfen 66 geformt sind und nunmehr die Formfinger 40 in Aktion treten. Im Falle einer verteilten Wellenwicklung 10, die in zwei Wicklungshälften 10' und 10" unterteilt ist, sind die zuerst gebildeten Wicklungsköpfe 66 diejenigen der oberen Wicklungshälfte 10'.

In dem in Fig. 3 dargestellten Zwischenstadium werden durch eine Drehbewegung der ringförmigen Scheibe 52 die Formfinger 40 radial nach außen bewegt. Sie nehmen dabei die Wicklungsköpfe 66 der Spulenwindungen 10' in Richtung zu den Formschultern 42 hin mit, die radial soweit außen angeordnet sind, daß die Spulenwindungen 10' in den radial äußeren Bereich der Statornuten gedrängt werden und dadurch die Spalte zwischen den Einziehlamellen 16, die Nuteingänge und den radial inneren Bereich der Nuten freigeben, so daß anschließend im Gegensatz zu herkömmlichen Einziehverfahren das Einziehen der zweiten Hälfte 10" der verteilten Wellenwicklung 10 in dieselben Nuten des Statorblechpakets nicht schwieriger ist und keine größere Einziehkraft erfordert als zuvor das Einziehen der ersten Hälfte 10' der verteilten Wellenwicklung 10. Dies gilt auch für Fälle, in denen in den Spalten zwischen den Einziehlamellen 16 des Einziehwerkzeugs eine Vielzahl von Schleifenwicklungen hängen, die in einem Einziehvorgang eingezogen werden sollen und sich bei der herkömmlichen Einziehtechnik gegenseitig behindern würden, weil sie sich am Umfang teilweise überlappen.

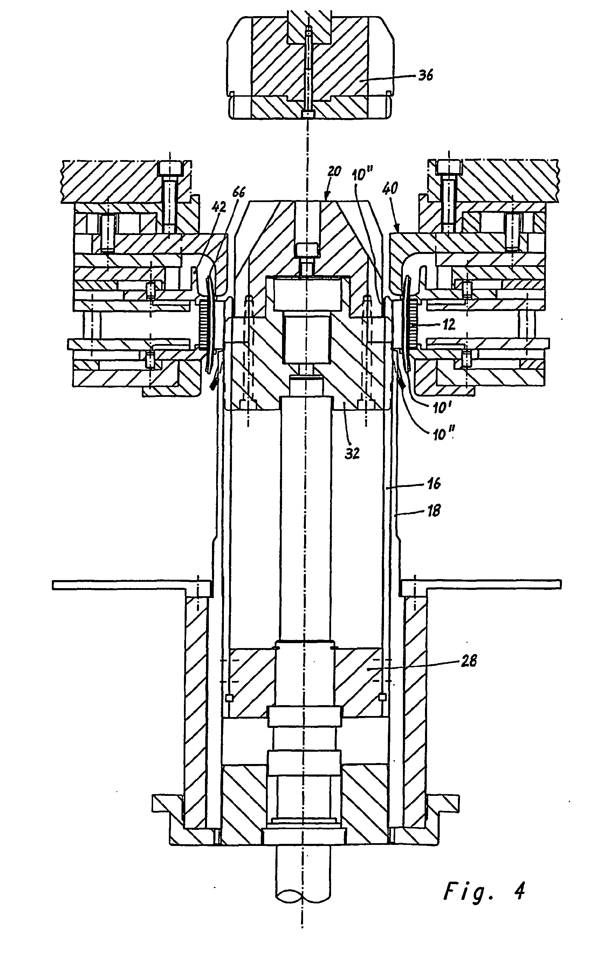

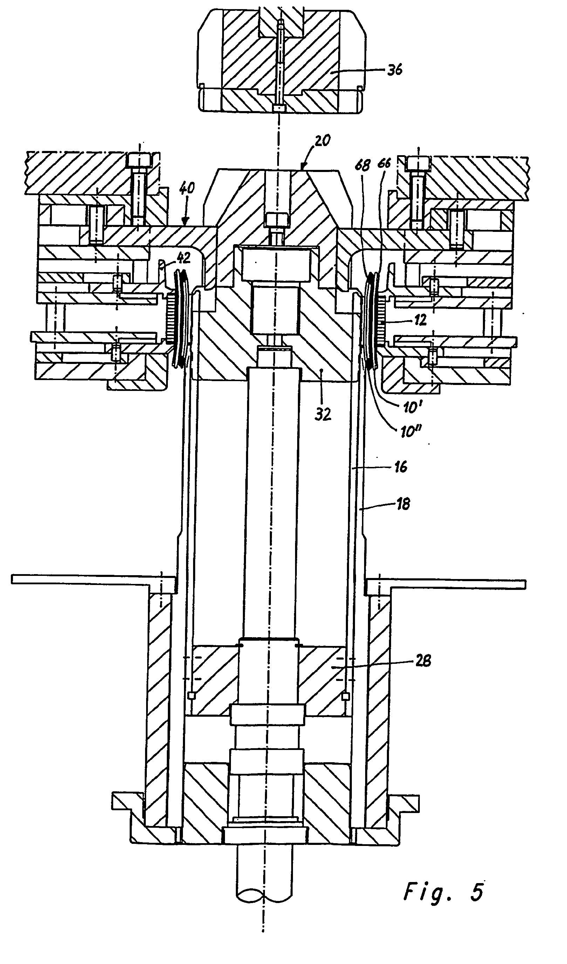

Fig. 4 zeigt die Teile des Einziehwerkzeugs noch im Zwischenstadium nach Fig. 3, jedoch am Ende der radialen Auswärtsbewegung der Formfinger 40. Für den weiteren Fortgang der Einziehoperation werden sie durch engegengesetzte Drehbewegung der Scheibe 52 wieder in ihre radial innere Endstellung vorgeschoben. Dann setzt der Einziehstern 20 seinen Einziehhub bis in die in Fig. 5 gezeigte Endstellung fort, in der er sämtliche übrigen Spulenwindungen, also im Beispielsfall die der zweiten Hälfte 10" der verteilten Wellenwicklung 10, nach oben aus den Spalten zwischen den Einziehlamellen 16 herausgeschoben und ihre Wicklungsköpfe durch seine schräge Randkante über die oberen Enden der Einziehlamellen 16 hinweg radial nach außen zurückgedrängt hat. Alternativ besteht die Möglichkeit, auch während des Einziehens des letzten Teils 10" der einzuziehenden Spulenwindungen 10 die Einziehlamellen 16 zusammen mit dem Einziehstern 20 axial vorzuschieben und dann die Einziehlamellen wieder auf das in Fig. 4 und 5 gezeigte Niveau zurückzuziehen, bei dem sich ihre oberen Enden etwa auf dem Niveau der oberen Stirnfläche des Statorblechpakets befinden. In dieser Stellung der Teile des Einziehwerkzeugs oder bei einer noch weiter zurückgezogenen Stellung der Einziehlamellen 16 und/oder des Einziehsterns 20 können die Formfinger 40, falls gewünscht, nunmehr auch noch die mit 68 bezeichneten Wicklungsköpfe des zuletzt eingezogenen Teils 10" der eingezogenen Spulenwindungen 10 radial nach außen verdrängen. Normalerweise ist dies jedoch nicht notwendig, selbst wenn danach in weiteren Einziehvorgängen noch die zweite und dritte Phase in Form verteilter Wellenwicklungen in dasselbe Statorblechpaket eingezogen werden sollen. Es genügt für jede Phase ein einziger Freiformvorgang jeweils nach dem Einziehen der ersten Hälfte der verteilten Wellenwickelung.

Es wird vorgeschlagen, nach dem Einziehen der ersten Phase in der vorstehend beschriebenen Weise und nach dem vollständigen Zurückziehen der Einziehlamellen 16 und Einziehsterns 20 vom Statorblechpaket 12 dieses weiterhin in der Statoraufnahme 14 eingespannt zu belassen, während zunächst die verteilte Wellenwicklung 10 der zweiten Phase und später auch der dritten Phase in die zugeordneten Spalte zwischen den Einziehlamellen 16 des Einziehwerkzeugs gehängt werden, um anschließend den vorstehend beschriebenen Einziehvorgang zu wiederholen. Zeitlich noch vorteilhafter ist es, mit einem Drehtisch zu arbeiten, an dem mindestens zwei Einziehwerkzeuge jeweils mit Lamellen 16, 18 und einem Einziehstern 20 angebracht sind, so daß das Erzeugen der Spulenwindungen 10 und ihr Einhängen in die Spalte zwischen den Einziehlamellen 16 bereits stattfinden können, während mittels eines anderen Einziehwerkzeugs die Spulenwindungen der vorhergehenden Phase in ein bestimmtes Statorblechpaket 12 eingezogen werden. Der Vorteil dieses Verfahrens besteht darin, daß dank der durchgehend über die Einziehvorgänge aller drei Phasen durchgehaltenen Einspannung des Statorblechpakets 12 in der Statorhalterung 14 alle Schwierigkeiten vermieden werden, die mit der Wiedereinführung der Stützfinger 38 zwischen die durch die bereits eingezogenen Spulen teilweise verformten Kragen der Isolierhülsen verbunden sind. Außerdem kann das oben beschriebene Freiformen mittels der Formfinger 40 ein sonst eventuell vor einem weiteren Einziehvorgang notwendiges Zwischenformen der bereits vorhandenen Wicklungsköpfe in einer besonderen Formstation ersetzen.

## Patentansprüche

1. Verfahren zum axialen Einziehen vorgewickelter Spulen in Nuten von Stator- oder Rotorblechpaketen für elektrische Maschinen mittels eines ringförmig angeordnete, parallele, axial verfahrbare Einziehlamellen (16) und einen zentralen, axial verfahrbaren Einziehstern (20)aufweisenden Einziehwerkzeugs, wobei die Spulenwindungen (10) in vorbestimmte Spalte zwischen den Einziehlamellen (16) eingehängt und diese derart in ein Blechpaket (12) eingeführt werden, daß sie dessen Innenwand zwischen den Eingängen der Nuten abdecken, während der Einziehstern (20) die sich innerhalb des Rings der Lamellen (16) erstreckenden inneren Umfangsbereiche der Spulenwindungen(10) durch die Bohrung des Blechpakets (12) hindurch bis über dessen hintere Stirnfläche hinaus vorschiebt, **dadurch gekennzeichnet, daß** während eines Einziehvorgangs in einer ersten Phase zunächst nur die inneren Umfangsbereiche eines Teils (10') der einzuziehenden Spulenwindungen (10) vom Einziehstern (20) vollständig durch die Bohrung des Blechpakets (12) hindurchgeschoben werden, dann in einer zweiten Phase wenigstens ein Teil der von diesen Spulenwindungen (10') gebildeten, über die hintere Stirnfläche des Blechpakets vorstehenden Wicklungsköpfe (66) radial nach außen verdrängt wird, und anschließend in einer dritten Phase die inneren Umfangsbereiche weiterer, während desselben Einziehvorgangs einzuziehender Spulenwindungen (10") vollständig durch die Bohrung des Blechpakets (12) hindurchgeschoben werden.

2. Verfahren nach Anspruch 1, **dadurch gekennzeichnet, daß** während der ersten Phase die vorderen Enden wenigstens eines Teils der Einziehlamellen (16) während der Vorschubbewegung der Spulenwindungen (10) bis auf einen bestimmten größeren Überstand über die hintere Stirnfläche des Blechpakets (12) vorgeschoben werden, und dann diese Einziehlamellen (16) auf einen bestimmten kleineren Überstand über die hintere Stirnfläche des Blechpakets (12) zurückgezogen werden, bevor die Wicklungsköpfe (66) radial nach außen verdrängt werden.

3. Verfahren nach Anspruch 1 oder 2, wobei die Spulen (10) die Form einer verteilten Wellenwicklung haben, deren Spulenwindungen (10', 10") im fertig eingezogenen Zustand sich jeweils am Austritt aus einer Nut des Blechpakets auf zwei sich nach entgegengesetzten Seiten erstreckende Wicklungsköpfe (66, 68) verteilen, **dadurch gekennzeichnet, daß** jeweils zunächst die inneren Umfangsbereiche derjenigen Spulenwindungen (10'), die einen der beiden Wicklungsköpfe (66) bilden, vollständig durch das Blechpaket (12) geschoben und dann radial nach außen verdrängt werden, und anschließend die inneren Umfangsbereiche derjenigen Spulenwindungen (10"), die den anderen der beiden Wicklungsköpfe (68) bilden, vom Einziehstern (20) vollständig durch das Blechpaket (12) geschoben werden.

4. Verfahren nach Anspruch 1 oder 2, wobei die Spulen (10) die Form einer Vielzahl von Schleifenwicklungen (10', 10") mit rundem oder polygonalem Querschnitt haben, deren Wicklungsköpfe (66, 68) sich im fertig eingezogenen Zustand am Umfang überlappen, **dadurch gekennzeichnet, daß** jeweils zunächst die inneren Umfangsbereiche derjenigen Spulen (10'), deren Wicklungsköpfe (66) im fertig eingezogenen Zustand radial weiter außen liegen, vollständig durch das Blechpaket (12) geschoben und dann radial nach außen verdrängt werden, und anschließend die inneren Umfangsbereiche derjenigen Spulen (10"), deren Wicklungsköpfe (68) im fertig eingezogenen Zustand radial weiter innen liegen, vom Einziehstern (20) vollständig durch das Blechpaket (12) geschoben werden.

5. Verfahren nach einem der vorhergehenden Ansprüche, **dadurch gekennzeichnet, daß** die Wicklungsköpfe (66), die zuerst vollständig durch das Blechpaket (12) geschoben und dann radial nach außen verdrängt werden, jeweils maximal bis zur Anlage gegen eine axial über die hintere Stirnfläche des Blechpakets (12) hinausragende Formschulter (42) verformt werden.

6. Verfahren nach einem der vorhergehenden Ansprüche, **dadurch gekennzeichnet, daß** die noch nicht vollständig eingezogenen Spulenwindungen (10") durch den Einziehstern (20) in ihrer jeweiligen axialen Zwischenposition in den Spalten zwischen den Einziehlamellen (16) gehalten werden, während die Wicklungsköpfe (66) der bereits vollständig eingezogenen Spulenwindungen (10') radial nach außen verdrängt werden.

7. Verfahren nach einem der vorhergehenden Ansprüche, **dadurch gekennzeichnet; daß** einige Einziehlamellen (16), die sich am Umfang nicht im Bereich der zuerst radial nach außen verdrängten Wicklungsköpfe (66) und unmittelbar neben den zuletzt vollständig durch das Blechpaket geschobenen Wicklungsköpfen (68) befinden, synchron mit den Spulenwindungen (10) axial vorgeschoben werden.

8. Verfahren nach einem der Ansprüche 1 bis 7, **dadurch gekennzeichnet, daß** über die Dauer mehrerer Einziehvorgänge das Blechpaket (12) in der Statorhalterung (14) eingespannt bleibt und in dieser Einspannung mehrmals mit einem einzuziehende Spulen (10) tragenden Einziehwerkzeug (16 - 20) in Eingriff gebracht wird.

9. Verfahren nach Anspruch 8, **dadurch gekennzeichnet, daß** während der Dauer der Einspannung des Blechpakets (12) mehrmals durch die Einziehvorgänge gebildete Wicklungsköpfe (66, 68) geformt werden, indem sie radial nach außen gedrängt werden.

10. Vorrichtung zur Durchführung des Verfahrens nach einem der Ansprüche 1 bis 9 mit einer Halterung (14) für ein Stator- oder Rotorblechpaket (12), ringförmig angeordneten, parallelen, axial durch das Blechpaket (12) verfahrbaren Einziehlamellen (16) und einem zentralen, axial verfahrbaren Einziehstern (20), **dadurch gekennzeichnet, daß** an der Halterung (14) für das Blechpaket (12) auf der in Vorschubrichtung des Einziehsterns (20) hinteren Seite eine Formeinrichtung (40) angeordnet ist, durch die in einem Zwischenstadium des Einziehvorgangs, in dem erst ein Teil (10') der einzuziehenden Spulenwindungen (10) mit ihrem inneren Umfangsbereich, der sich innerhalb des Rings der Lamellen (16) erstreckt und im fertig eingezogenen Zustand über die hintere Stirnseite des Blechpakets (12) vorstehende Wicklungsköpfe (66) bildet, vollständig durch das Blechpaket (12) hindurchgeschoben worden ist, wenigstens ein Teil dieser bereits gebildeten Wicklungsköpfe (66) radial nach außen verdrängbar ist.

11. Vorrichtung nach Anspruch 10, **dadurch gekennzeichnet, daß** die Verfahrbewegung wenigstens eines Teils der Einziehlamellen (16) derart steuerbar ist, daß sie aus einer im ersten Teil des Einziehvorgangs erreichten Stellung mit einem größeren Überstand ihrer vorderen Enden über die hintere Stirnseite des Blechpakets (12) auf einen kleineren Überstand zurückziehbar sind, bevor in dem Zwischenstadium die Formeinrichtung (40) zum Verdrängen wenigstens eines Teils der bereits vorhandenen Wicklungsköpfe (66) betätigbar ist.

12. Vorrichtung nach Anspruch 10 oder 11, **dadurch gekennzeichnet, daß** die Formeinrichtung radial bewegbare Formfinger (40) aufweist, die hinter der hinteren Stirnfläche des Blechpakets (12) radial nach innen bis in eine Stellung bewegbar sind, in der sie sich radial innerhalb von an der radial inneren Seite der Einziehlamellen (16) anliegenden Spulenwindungen (10) befinden; und die in dem Zwischenstadium radial nach außen bis über die Bohrung des Blechpakets (12) hinaus bewegbar sind und die dabei erfaßten Wicklungsköpfe (66) mitnehmen.

13. Vorrichtung nach Anspruch 12, **dadurch gekennzeichnet, daß** die Formfinger (40) einen sich radial erstreckenden Schenkel (44), an dem sie geführt sind, und einen sich axial erstreckenden Schenkel (46), mit dem sie die radial zu verdrängenden Wicklungsköpfe (66) erfassen, aufweisen.

14. Vorrichtung nach einem der Ansprüche 10 bis 13, **dadurch gekennzeichnet, daß** die Halterung (14) des Blechpakets (12) Formschultern (42) aufweist, die axial über die hintere Stirnfläche des Blechpakets (12) überstehen und eine radial äußere Andruckfläche für von den Formfingern (40) radial nach außen verdrängte Wicklungsköpfe (66) bilden.

15. Vorrichtung nach Anspruch 14, **dadurch gekennzeichnet, daß** die Formschultern (42) an radial verfahrbaren Stützfingern (38) angeformt sind, die Kragenstützen für in die Nuten des Blechpakets (12) eingesetzte Schutzhülsen mit stirnseitig überstehenden Kragen bilden.

16. Vorrichtung nach einem der Ansprüche 12 bis 15, **dadurch gekennzeichnet, daß** die Formfinger (40) an einem die Halterung (14) des Blechpakets gegen die Einziehkraft abstützenden Niederhalter (45) gelagert sind.

17. Vorrichtung nach einem der Ansprüche 10 bis 16, **dadurch gekennzeichnet, daß** der vordere, die radial inneren Umfangsbereiche der Spulenwindungen (10) radial führende Teil (34) des Einziehsterns (20) an denjenigen Stellen des Umfangs, wo sich Formfinger (40) befinden, mit Ausnehmungen (62) versehen ist, in welche die Formfinger (40) während des Vorschubs des Einziehsterns (20) axial eintauchen und aus denen sie in dem Zwischenstadium radial ausfahren.

18. Vorrichtung nach einem der Ansprüche 10 bis 17, **dadurch gekennzeichnet, daß** sie einen an sich bekannten Ausrichtstern (36) zur Abstützung der vorderen Enden der Einziehlamellen (16) aufweist und auch dieser Ausrichtstern (36) an denjenigen Stellen des Umfangs, wo sich Formfinger (40) befinden, mit Ausnehmungen (64) versehen ist, so daß der Ausrichtstern (36) axial an den Formfingern (40) vorbei bewegbar ist.

## Claims

1. Method for axially drawing pre-wound coils into slots of stator or rotor laminated cores for electrical machines by means of a draw-in tool comprising parallel, axially mobile draw-in laminations (16), which are disposed in an annular manner, and a central, axially mobile draw-in star (20), wherein the coil turns (10) are suspended in predetermined gaps between the draw-in laminations (16) and these are introduced into a laminated core (12) such that they cover the inner wall thereof between the entrances of the slots, while the draw-in star (20) advances the inner circumferential regions, extending inside the ring of the laminations (16), of the coil turns (10) through the bore of the laminated core (12) beyond the rear end face thereof, **characterised in that** during a draw-in operation in a first phase only the inner circumferential regions of some (10') of the coil turns (10) which are to be drawn in are firstly pushed completely through the bore of the laminated core (12), then in a second phase at least some of the end turns (66) which are produced by these coil turns (10') and project beyond the rear end face of the laminated core are displaced radially outwards, and subsequently in a third phase the inner circumferential regions of further coil turns (10") which are to be drawn in during the same draw-in operation are pushed completely through the bore of the laminated core (12).

2. Method according to Claim 1, **characterised in that** during the first phase the front ends at least of some of the draw-in laminations (16) are advanced during the advance movement of the coil turns (10) up to a certain greater overhang beyond the rear end face of the laminated core (12), and then these draw-in laminations (16) are retracted to a certain smaller overhang beyond the rear end face of the laminated core (12) before the end turns (66) are displaced radially outwards.

3. Method according to Claim 1 or 2, wherein the coils (10) are in the form of a distributed wave winding whose coil turns (10', 10") in the finally drawn-in state are in each case distributed at the exit from a slot of the laminated core between two end turns (66, 68) extending towards opposite sides, **characterised in that** the inner circumferential regions of those coil turns (10') which produce one of the two end turns (66) are in each case firstly pushed completely through the laminated core (12) and then displaced radially outwards, and subsequently the inner circumferential regions of those coil turns (10") which produce the other of the two end turns (68) are pushed completely through the laminated core (12).

4. Method according to Claim 1 or 2, wherein the coils (10) are in the form of a plurality of lap windings (10', 10") with a round or polygonal cross section whose end turns (66, 68) overlap at the circumference in the finally drawn-in state, **characterised in that** the inner circumferential regions of those coils (10') whose end turns (66) lie radially further outwards in the drawn-in state are in each case firstly pushed completely through the laminated core (12) and then displaced radially outwards, and subsequently the inner circumferential regions of those coils (10") whose end turns (68) lie radially further inwards in the finally drawn-in state are pushed completely through the laminated core (12) by the draw-in star (20).

5. Method according to any one of the preceding Claims, **characterised in that** the end turns (66) which are firstly pushed completely through the laminated core (12) and then displaced radially outwards are in each case formed at most until abutting against a forming shoulder (42) projecting axially beyond the rear end face of the laminated core (12).

6. Method according to any one of the preceding Claims, **characterised in that** the coil turns (10") which have not yet been completely drawn in are held by the draw-in star (20) in their respective axial intermediate position in the gaps between the draw-in laminations (16), while the end turns (66) of the coil turns (10') which have already been completely drawn in are displaced radially outwards.

7. Method according to any one of the preceding Claims, **characterised in that** some draw-in laminations (16) which are located at the circumference not in the region of the end turns (66) firstly displaced radially outwards and directly next to the end turns (68) finally pushed completely through the laminated core are advanced axially in synchronism with the coil turns (10).

8. Method according to any one of Claims 1 to 7, **characterised in that** the laminated core (12) remains clamped in the stator holder (14) for the duration of a plurality of draw-in operations and in this clamped state is repeatedly engaged with a draw-in tool (16 - 20) bearing coils (10) which are to be drawn in.

9. Method according to Claim 8, **characterised in that** end turns (66, 68) produced by the draw-in operations are repeatedly formed while the laminated core (12) is in the clamped state by being displaced radially outwards.

10. Device for carrying out the method according to any one of Claims 1 to 9 with a holder (14) for a stator or rotor laminated core (12), parallel draw-in laminations (16), which are disposed in an annular manner and can move axially through the laminated core (12), and a central, axially mobile draw-in star (20), **characterised in that** a forming device (40) is disposed at the holder (14) for the laminated core (12) on the side which is at the rear in the advance direction of the draw-in star (20), through which forming device, in an intermediate stage of the draw-in operation, in which only some (10') of the coil turns (10) which are to be drawn in have been pushed completely through the laminated core (12) by way of their inner circumferential region, which extends inside the ring of the laminations (16) and in the finally drawn-in state produces end turns (66) projecting beyond the rear end side of the laminated core, at least some of these end turns (66) which have already been produced can be displaced radially outwards.

11. Device according to Claim 10, **characterised in that** the travelling movement at least of some of the draw-in laminations (16) can be controlled such that they can be retracted from a position which is reached in the first part of the draw-in operation with a greater overhang of their front ends beyond the rear end side of the laminated core (12) to a smaller overhang before the forming device (40) can be actuated in the intermediate stage to displace at least some of the end turns (66) already existing.

12. Device according to Claim 10 or 11, **characterised in that** the forming device comprises radially mobile forming fingers (40) which can be moved radially inwards behind the rear end face of the laminated core (12) into a position in which they are located radially inside coil turns (10) abutting against the radially inner side of the draw-in laminations (16), and which can be moved radially outwards in the intermediate stage beyond the bore of the laminated core (12) and in the process entrain engaged end turns (66).

13. Device according to Claim 12, **characterised in that** the forming fingers (40) comprise a radially extending limb (44), at which they are guided, and an axially extending limb (44), by way of which they engage the end turns (66) which are to be radially displaced.

14. Device according to any one of Claims 10 to 13, **characterised in that** the holder (14) of the laminated core (12) comprises forming shoulders (42) which project axially beyond the rear end face of the laminated core (12) and produce a radially outer pressure face for end turns (66) displaced radially outwards by the forming fingers (40).

15. Device according to Claim 14, **characterised in that** the forming shoulders (42) are formed on radially mobile support fingers (38) being collar supports for protective sleeves which are inserted in the slots of the laminated core (12) and have collars projecting at the end side.

16. Device according to any one of Claims 12 to 15, **characterised in that** the forming fingers (40) are mounted at a hold-down device (45) which supports the holder (14) of the laminated core against the draw-in force.

17. Device according to any one of Claims 10 to 16, **characterised in that** the front part (34), which radially guides the radially inner circumferential regions of the coil turns (10), of the draw-in star (20) is provided at those points of the circumference where forming fingers (40) are located with recesses (62) into which the forming fingers (40) enter axially during the advance of the draw-in star (20) and out of which they travel radially in the intermediate stage.

18. Device according to any one of Claims 10 to 17, **characterised in that** it comprises an aligning star (36), which is known per se, for supporting the front ends of the draw-in laminations (16), and this aligning star (36) is also provided at those points of the circumference where forming fingers (40) are located with recesses (64), so that the aligning star (36) can move axially past the forming fingers (40) .

## Revendications

1. Procédé d'insertion axiale de bobines préenroulées dans des rainures de paquets de tôles de stator ou de rotor destinés à des machines électriques, au moyen d'un outil d'insertion comprenant des lamelles d'insertion (16), disposées en anneaux, parallèles et mobiles axialement, ainsi qu'une étoile centrale d'insertion (20) déplaçable axialement, les spires de bobines (10) étant suspendues dans des fentes prédéfinies existant entre les lamelles d'insertion (16) qui sont introduites dans le paquet de tôles (12) de manière à recouvrir la paroi interne du paquet entre les entrées des rainures, tandis que l'étoile d'insertion (20) fait coulisser les zones périphériques internes des spires de bobine (10) se trouvant à l'intérieur de l'anneau des lamelles (16) jusque sur la face frontale arrière du paquet, à travers l'alésage du paquet de tôles (12),
**caractérisé en ce que**
pendant une opération d'insertion, dans une première phase, tout d'abord seules les zones périphériques internes d'une partie (10') des spires de bobine (10) à insérer sont glissées entièrement par l'étoile d'insertion (20) à travers l'alésage du paquet de tôles (12), puis dans une deuxième phase, au moins une partie des têtes d'enroulement (66) formées par ces spires de bobine (10') et qui font saillie sur la face frontale arrière du paquet de tôles, sont déplacées radialement vers l'extérieur et enfin, dans une troisième phase, les zones périphériques internes d'autres spires de bobine (10") à insérer pendant la même opération d'insertion, sont coulissées totalement à travers l'alésage du paquet de tôles (12).

2. Procédé selon la revendication 1,
**caractérisé en ce que**
pendant la première phase, les extrémités avant d'au moins une partie des lamelles d'insertion (16) sont glissées pendant le déplacement en avant des spires de bobine (10), jusqu'à présenter un dépassement défini assez grand sur la face frontale arrière du paquet de tôles (12), puis ces lamelles (16) sont ramenées jusqu'à un dépassement défini plus petit sur la face arrière du paquet de tôles (12), avant que les têtes d'enroulement (66) soient déplacées radialement vers l'extérieur.

3. Procédé selon la revendication 1 ou 2, en quoi les bobines (10) ont la forme d'un enroulement ondulé réparti dont les spires de bobine (10', 10"), quand elles sont finalement insérées, sont réparties chacune à la sortie d'une rainure du paquet de tôles sur deux têtes d'enroulement (66, 68) s'étendant selon deux côtés opposés,
**caractérisé en ce que**
chaque fois tout d'abord les zones périphériques internes des spires de bobine (10') qui forment une des deux têtes d'enroulement (66) sont glissées totalement à travers le paquet de tôles (12) et ensuite poussées radialement vers l'extérieur, et enfin les zones périphériques internes des spires de bobine (10") qui forment l'autre tête d'enroulement (68) sont glissées totalement par l'étoile d'insertion (20) à travers le paquet de tôles (12).

4. Procédé selon la revendication 1 ou 2, en quoi les bobines (10) ont la forme d'une pluralité d'enroulements imbriqués parallèles (10', 10") présentant une section ronde ou polygonale et dont les têtes d'enroulement (66, 68) se superposent périphériquement à l'état totalement inséré,
**caractérisé en ce que**
chaque fois tout d'abord les zones périphériques internes des bobines (10') dont les têtes d'enroulement (66) à l'état inséré final se trouvent radialement plus vers l'extérieur, sont glissées totalement à travers le paquet de tôles (12) puis chassées radialement vers l'extérieur, et ensuite les zones périphériques internes des bobines (10") dont les têtes d'enroulement (68) à l'état inséré final se trouvent radialement plus vers l'intérieur, sont glissées totalement par l'étoile d'insertion (20) à travers le paquet de tôles (12).

5. Procédé selon une des revendications précédentes,
**caractérisé en ce que**
les têtes d'enroulement (66) qui sont d'abord glissées totalement à travers le paquet de tôles (12) et ensuite chassées radialement vers l'extérieur, sont déformées chaque fois au maximum jusqu'à être en appui sur un épaulement de formage (42) faisant saillie axialement vers l'extérieur sur la face frontale arrière du paquet de tôles (12).

6. Procédé selon une des revendications précédentes,
**caractérisé en ce que**
les spires de bobine (10") qui ne sont pas encore complètement insérées sont maintenues par l'étoile d'insertion (20) chacune dans leur position intermédiaire axiale dans les fentes entre les lamelles d'insertion (16) pendant que les têtes d'enroulement (66) des spires de bobine (10') déjà totalement insérées sont chassées radialement vers l'extérieur.

7. Procédé selon une des revendications précédentes,
**caractérisé en ce que**
quelques lamelles d'insertion (16), qui en périphérie ne se trouvent pas dans la zone des têtes d'enroulement (66) chassées en premier radialement vers l'extérieur et directement à côté des têtes d'enroulement (68) glissées totalement en dernier lieu à travers le paquet de tôles, sont avancées axialement en synchronisme avec les spires de bobine (10).

8. Procédé selon une des revendications 1 à 7,
**caractérisé en ce que**
pendant la durée de plusieurs opérations d'insertion, le paquet de tôles (12) reste serré dans le support de stator (14) et sous cette contrainte, il est amené en prise plusieurs fois avec un outil d'insertion (16 - 20) portant des bobines (10) à insérer.

9. Procédé selon la revendication 8,
**caractérisé en ce que**
pendant la durée du serrage du paquet de tôles, plusieurs fois des têtes d'enroulement (66, 68) réalisées par les opérations d'insertion sont mises en forme en même temps qu'elles sont chassées radialement vers l'extérieur.

10. Dispositif pour la mise en oeuvre du procédé selon une des revendications 1 à 9, comprenant un support (14) pour un paquet de tôles de stator ou de rotor (12), des lamelles d'insertion (16) disposées en anneau, parallèles et pouvant être déplacées axialement à travers le paquet de tôles (12) ainsi qu'une étoile d'insertion (20) centrale et mobile axialement,
**caractérisé en ce que**
sur le support (14) pour le paquet de tôles (12) est monté du côté arrière par rapport à la direction d'avancement de l'étoile d'insertion (20), un dispositif de formage (40) par lequel, dans un stade intermédiaire de l'opération d'insertion au cours duquel seulement une partie (10') des spires de bobine (10) à insérer avec leur zone périphérique interne qui s'étend à l'intérieur de la bague des lamelles (16) et forme à l'état totalement inséré des têtes d'enroulement (66) en saillie sur la face frontale arrière du paquet de tôles (12), a été totalement glissée à travers le paquet de tôles (12), au moins une partie de ces têtes d'enroulement (66) déjà formées pouvant être chassées radialement vers l'extérieur.

11. Dispositif selon la revendication 10,
**caractérisé en ce que**
le déplacement d'au moins une partie des lamelles d'insertion (16) peut être commandé de manière que ces lamelles, partant d'une position qu'elles ont atteinte pendant la première partie de l'opération d'insertion avec un dépassement assez grand de leurs extrémités avant par rapport à la face frontale arrière du paquet de tôles (12), peuvent être ramenées à un dépassement plus faible avant que, dans le stade intermédiaire, le dispositif de formage (40) puisse être actionné pour déplacer au moins une partie des têtes d'enroulement (66) déjà présentes.

12. Dispositif selon la revendication 10 ou 11,
**caractérisé en ce que**
le dispositif de formage présente des doigts de formage (40) mobiles radialement et qui peuvent se déplacer derrière la face frontale arrière du paquet de tôles (12), radialement vers l'intérieur jusqu'à atteindre une position dans laquelle ils se trouvent radialement à l'intérieur des spires de bobine (10) en contact avec la face radialement interne des lamelles d'insertion (16), ces doigts pouvant se déplacer radialement pendant le stade intermédiaire vers l'extérieur jusqu'au dessus de l'alésage du paquet de tôles (12) en entraînant ainsi les têtes d'enroulement (66) qu'ils ont saisies.

13. Dispositif selon la revendication 12,
**caractérisé en ce que**
les doigts de formage (40) présentent chacun une branche (44) dirigée radialement le long de laquelle ils sont guidés, et une branche (46) dirigée axialement avec laquelle ils saisissent les têtes d'enroulement (66) à chasser radialement.

14. Dispositif selon une des revendications 10 à 13,
**caractérisé en ce que**
le support (14) du paquet de tôles (12) présente des épaulements de formage (42) qui font saillie axialement sur la face frontale arrière du paquet de tôles (12) et forment une portée de pression radialement externe pour les têtes d'enroulement (66) chassées radialement vers l'extérieur par les doigts de formage (40).

15. Dispositif selon la revendication 14,
**caractérisé en ce que**
les épaulements de formage (42) sont réalisés sur des doigts d'appui (38) mobiles radialement qui présentent des appuis de collet pour des douilles de protection insérées dans les rainures du paquet de tôles (12) avec des collets en saillie du côté frontal.

16. Dispositif selon une des revendications 12 à 15,
**caractérisé en ce que**
les doigts de formage (40) sont montés sur une infrastructure (45) qui soutient le support (14) du paquet de tôles contre l'action de la force d'insertion.

17. Dispositif selon une des revendications 10 à 16,
**caractérisé en ce que**
la partie avant (34) de l'étoile d'insertion (20) qui guide radialement les zones périphériques radialement internes des spires de bobine (10), présente aux points de la périphérie où se trouvent les doigts de formage (40), des évidements (62) dans lesquels ces doigts, pendant le coulissement de l'étoile d'insertion (20), pénètrent axialement, pour en sortir radialement au stade intermédiaire.

18. Dispositif selon une des revendications 10 à 17,
**caractérisé en ce qu'**
il présente une étoile d'orientation (36) connue en soi pour servir de soutien aux extrémités avant des lamelles d'insertion (16), et également cette étoile d'orientation (36), aux points de la périphérie où se trouvent les doigts de formage (40), est équipée d'évidements (64), de sorte que l'étoile d'orientation (36) peut se déplacer axialement devant les doigts de formage (40).
